# EUROPEAN PATENT APPLICATION

(11) **EP 3 828 459 A1**
(43) Date of publication of application: **02.06.2021**
(21) Application number: 18927549.8
(22) Date of filing: 04.09.2018
(51) Int. Cl.: F16S 5/00

(54) **ASSEMBLY STRUCTURE**

(30) Priority: 24.07.2018 CN 201810818580; 24.07.2018 CN 201821182610 U
(71) Applicant: Deng, Xuesong, Urumqi, Xinjiang 830000 (CN)
(72) Inventor: Deng, Xuesong, Urumqi, Xinjiang 830000 (CN)
(74) Representative: Alatis
(86) International application number: PCT/CN2018/103908
(87) International publication number: WO 2020/019410

(57) **Abstract**

An assembly structure, comprising multiple first assembly units (11), wherein each first assembly unit (11) comprises a main part (12) and a connecting part (13); the contour shape of the cross section of each main part (12) is a 6n polygon wherein at least two side edges have unequal lengths, and the opposite side edges of the axial projection of the main part (12) are parallel, n being a positive integer; the connecting part (13) is arranged on each side edge of each of the main parts (12); the connecting part (13) on each side edge may be in sliding fit connection to the connecting part (13) of an adjacent first assembly unit (11), and the sliding direction of the connecting part (13) is the same as the extension direction of the side edges where the connecting part is located. The described assembly units of the assembly structure are connected and disassembled by means of sliding fit. After assembly is completed, detachment cannot occur under natural conditions, and the assembly structure is highly reliable. In addition, after assembly is completed, if the connection at a certain position comes apart, the strength of the whole structure will not be affected. Moreover, the assembly process of the present assembly structure is simple, extra connecting parts are not needed, and the cost is low.

## Description

The present application claims the priorities to the following two Chinese patent applications, both of which are incorporated herein by reference in their entireties,
1) Chinese Patent Application No. 201810818580.3, titled "ASSEMBLY STRUCTURE", filed with the China National Intellectual Property Administration on July 24, 2018, and
2) Chinese Patent Application No. 201821182610.8, titled "ASSEMBLY STRUCTURE", filed with the China National Intellectual Property Administration on July 24, 2018.

### FIELD

The present application relates to the technical field of connecting members, and in particular to an assembly structure.

### BACKGROUND

Traditional connection methods for an assembly structure generally adopt bolt pairs, rivets, welding, etc.. These connection methods may be troublesome in construction, have many parts, be difficult to ensure the connection quality and firmness, and has high labor time and cost. Especially for a large system engineering, these methods have long construction time, high cost, low efficiency and shocking later maintenance cost.

In addition, with the existing connection methods, the integrity cannot be ensured, and small flaws easily affect the whole assembly structure, and problems caused by small flaws should not be easy to be checked.

Therefore, how to improve the existing assembly structure, improve the firmness of the connection, reduce the mounting parts, and reduce the cost is a technical problem that needs to be solved by those skilled in the art.

### SUMMARY

An object of the present application is to provide an assembly structure, which improves the connection firmness, reduces the mounting parts and reduces the cost.

An assembly structure, including multiple first assembling units, each of the first assembling units includes a main body part and a connecting part. A contour shape of a cross-section of the main body part is a 6n polygons with at least two unequal sides, and opposite sides of the projection of the main body part in the axial direction are parallel. N is a positive integer; the connecting part is arranged on each side of the main body part, and is connected to the main body part as an integral structure; the connecting part on each of the sides can be slidably connected to the connecting part of the adjacent first assembling unit, and the sliding direction of the connecting part is the same as the extension direction on the side where it is located.

Preferably, in the above assembly structure, the side of the main body part of the first assembling unit a straight side;
or, the side of the main body part of the first assembling unit a curved side, and opposite sides are parallel.

Preferably, in the above assembly structure, in the connecting parts of any two adjacent sides of the first assembling unit, one of the connecting parts is a first sliding groove, and the other of the connecting parts is a sliding fit structure capable of sliding fit with the first sliding groove. The extension direction of the first sliding groove is the same as the extension direction of the side where the first sliding groove is located.

Preferably, in the above assembly structure, the sliding fit structure is a second sliding groove arranged along the extension direction of the side where the sliding fit structure is located, the openings of the first sliding groove and the second sliding groove are opposite in direction, and the first sliding groove and the second sliding groove can be engaged with each other.

Preferably, in the above assembly structure, the side wall thickness of the first sliding groove inserted into the second sliding groove is smaller than or equal to the width of the second sliding groove, and the side wall thickness of the second sliding groove inserted into the first sliding groove is smaller than or equal to a width of the first sliding groove.

Preferably, in the above assembly structure, one end and/or two ends of the first sliding groove and the second sliding groove along the sliding direction is/are provided with a sliding entrance structure.

Preferably, in the above assembly structure, the second sliding groove is an L-shaped slide fastener which can be inserted into the first sliding groove, and the side wall of the L-shaped slide fastener can be inserted into the first sliding groove.

Preferably, in the above assembly structure, the width of the notch of the first sliding groove is smaller than the width between the side walls of the notch, and the second sliding groove is a T-shaped slide fastener which can extend into the first sliding groove.

Preferably, in the above assembly structure, the included angle between the connecting part and the main body part of the first assembling unit is 90 degrees.

Preferably, in the above assembly structure, the connecting part on the side is also connected to the adjacent first assembling unit through a first pin-fitting structure. The first pin-fitting structure includes a first pin shaft arranged on a connecting part of one of the first assembling units, and a first pin shaft hinge which is arranged on a connecting part of the other first assembling unit can be hinged with the first pin shaft. The extension direction of the first pin shaft is the same as the extension direction of the side where it is located.

Preferably, in the above assembly structure, a slot is provided between the connecting part and the main body to allow the connecting part to be elastically deformed. The assembly structure further includes a support rib detachably connected to the first assembling unit. When the support rib is supported in the slot, it can prevent the connecting part from being elastically deformed.

Preferably, in the above assembly structure, the first assembling unit is provided with a buckle for mounting the support rib.

Preferably, in the above assembly structure, further including a second assembling unit which includes a main body part and a connecting part, and the contour shape of the main body part of the second assembling unit is polygonal, and the connecting part of the second assembling unit is arranged on the side of the second assembling unit and has an integrated structure; a connecting part of the second assembling unit can be slidably connected to a connecting part of the first assembling unit or a connecting part of an adjacent second assembling unit.

Preferably, in the above assembly structure, the included angle between the connecting part of the second assembling unit and the main body part of the second assembling unit is 90 degrees.

Preferably, in the above assembly structure, the connecting part of the second connecting unit is also connected to the connecting part of the first assembling unit or the connecting part of the second assembling unit through a second pin-fitting structure. The second pin-fitting structure further includes a second pin shaft arranged on one connecting part, and a second pin shaft hinge which is arranged on the other connecting part and can be hinged with the second pin shaft. The extension direction of the second pin shaft is the same as the extension direction of the side where it is located.

In the technical solution provided by the present application, the profile shape of the cross section of the first assembling unit is at least two 6n polygons with unequal side lengths, and the opposite sides of the projection of the main body part in the axial direction are parallel. Where, (n=l, 2, 3, 4, 5, 6 and other natural numbers). For example, when n=1, the main body of the first assembling unit is hexagonal; when n=2, the main body of the first assembling unit is 12-sided. In this application, the six positions of the main body of the first assembling unit are changed from simultaneous assembling to assembling in three stages, which greatly reduces the difficulty.

The main body part of the first assembling unit is connected to a connecting part, and the connecting parts are respectively connected on each side of the main body part. It should be noted that, the side is any one of the above 6n sides. The connecting part on each side can be connected to the connecting part of the adjacent first assembling unit in a sliding fit, and the sliding direction of the connecting part is the same as the extension direction on the side where the connecting part is located.

With this arrangement, any one of the 6n sides of the above-mentioned 6n polygon has a sliding pair connection with other surrounding assembling units. During connection, when the sliding pairs whose extension lines in the sliding direction intersect at one point are all slidably connected, the sliding degrees of freedom of these sliding pairs may form mutual constraints. In this way, under natural conditions, the sliding pair will not untie. When one of the sliding pairs fails, the overall structural strength may not be affected. In the assembly structure provided by the present application, after the assembling is completed, if the individual assembling units are to be disassembled, a special tool is required to drive the associated first assembling units to move in cooperation with each other to disassemble the sliding pair. The main body of the first assembling unit in the present application has a cross-sectional profile shape of at least two 6n sides with unequal lengths, and the opposite sides of the main body projected in the axial direction are parallel. Therefore, the lengths of the sliding pairs matched by the two first assembling units are different, and the time points at which the sliding pairs corresponding to each side of each unit are combined during the entire sliding fit process are different, with first and second. Therefore, when splicing them, the positioning can be a straight line connecting end to end, and the 6n polygon is divided into multiple sliding fits, which greatly reduces the difficulty of assembly.

### BRIEF DESCRIPTION OF THE DRAWINGS

For more clearly illustrating embodiments of the present application or technical solutions in the conventional technology, the drawings referred to for describing the embodiments or the conventional technology will be briefly described hereinafter. Apparently, the drawings in the following description are only some examples of the present application, and for those skilled in the art, other drawings may be obtained based on the provided drawings without any creative efforts.
Figure 1 is a schematic diagram of a first structure of a first assembling unit in an embodiment of the present application;
Figure 2 is a schematic diagram of the structure of the first assembling unit in Figure 1 after assembling;
Figure 3 is a schematic diagram of a three-dimensional structure of the first structure of the first assembling unit in the embodiment of the present application;
Figure 4 is a top view of the three-dimensional structure in Figure 3;
Figure 5 is a schematic diagram of a three-dimensional structure of the first structure of the first assembling unit in the embodiment of the present application after assembling;
Figure 6 is a schematic diagram of a second structure of a first assembling unit in an embodiment of the present application;
Figure 7 is a schematic structural diagram of the first assembling unit in Figure 6 after assembling;
Figure 8 is a schematic structural diagram of a second assembling unit in an embodiment of the present application;
Figure 9 is a structural schematic diagram of the first assembling unit connected by a pin shaft after bending in an embodiment of the present application;
Figure 10 is a structural schematic diagram of the first assembling unit connected by a pin shaft in an embodiment of the present application;
Figure 11 is a perspective view of a third structure of the first assembling unit in the embodiment of the present application;
Figure 12 is a perspective view of another structure of the first assembling unit in the embodiment of the present application.

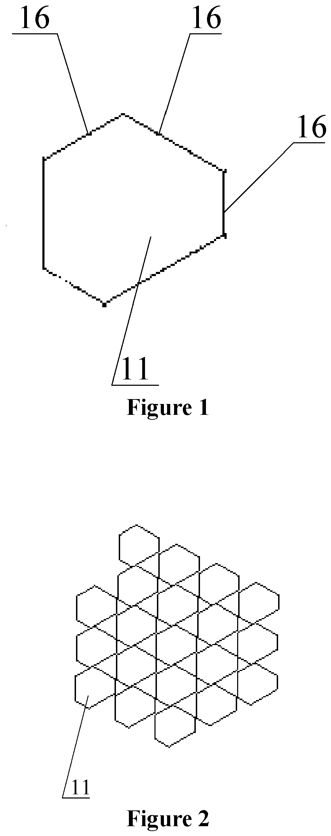

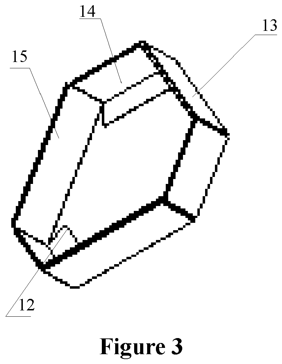

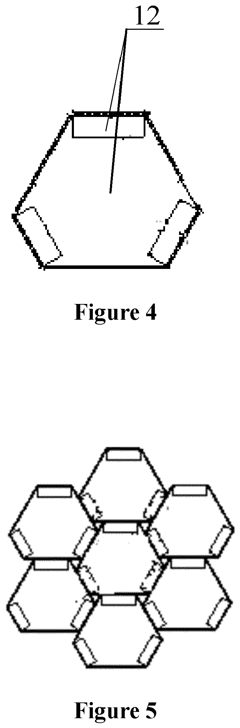

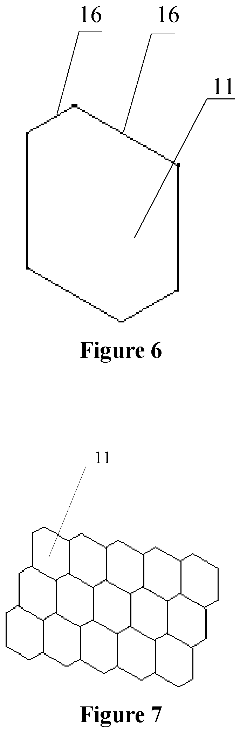

In Figures 1 to 12:

| | |
|---|---|
| 11 first assembling unit | 12 main body part |
| 13 connecting part | 14 first sliding groove |
| 15 sliding fit structure | 16 side edge |

### DETAILED DESCRIPTION OF EMBODIMENTS

An object of the embodiment is to provide an assembly structure, which can improve the connection firmness, reduce the mounting parts and reduce the cost.

Hereinafter, embodiments will be described with reference to the drawings. Besides, the embodiments shown below do not play any role in limiting the inventive content described in the claims. In addition, the entire contents of the configuration shown in the following embodiments are not limited to what is necessary as a solution to the invention described in the claims.

Referring to Figure 1 to Figure 12, the embodiment provides an assembly structure, including multiple first assembling units 11. Each first assembling unit 11 may specifically have a plate-shaped or block-shaped structure. The first assembling unit 11 includes a main body part 12 and a connecting part 13.

The contour shape of the cross section of the main body part 12 is a 6n polygon having at least two unequal sides, and the opposite sides of the projection of the main body part in the axial direction are parallel. That is, the main body is a cylindrical structure with a 6n polygon in the circumferential direction, and its thickness may be set according to different needs, which is not specifically limited here. The side lengths of at least two sides of the 6n-sided column structure are different. Specifically, all of them may be different or set according to different needs, which are all within the protection scope. The core of the main body in this application is that the opposite sides of the projection of the 6n polygon cylindrical structure along the axis direction are parallel, and the axis direction in this application is the height direction of the 6n polygon cylindrical structure, which can also be understood as the direction of the center line of the 6n polygon cylindrical structure. The opposite sides of the projection of the main body along the axial direction are set to be parallel, so as to ensure that all the sides can be accurately positioned in the assembling process of the first assembling units and prevent the problem that adjacent first assembling units cannot be spliced with each other. Parallel in this application can be understood as parallel within a certain error range.

N is a positive integer. For example, n may be 1. If n is 1, the contour shape of main body part 12 is a hexagon; if n is 2, the contour shape of main body part 12 is a dodecagon; if n is 3, it is an octadecagon, etc.. The core of the present application is that the contour shape of the main body part 12 is that the two opposite sides are parallel. If n is 1, the main body part 12 is a hexagon with parallel opposite sides. In practice, the side length of the main body part 12 can be set according to different needs, which are all within the protection range.

A connecting part 13 is provided on a side 16 of each main body part 12, and the connecting part 13 and the main body part 12 are an integrated structure, for example, it may be connected into an integrated structure by injection molding, sheet metal, or welding.

Among two connecting parts 13 of two adjacent sides 16 of the main body part 12 of the first assembling unit 11, one connecting part 13 is a first sliding groove 14, and the other connecting part 13 is a sliding fit structure 15 capable of sliding fit with the first sliding groove. The extension direction of the first sliding groove is the same as the extension direction of the side where the first sliding groove is located, that is, the sides of the main body parts 12 of the adjacent first assembling unit 11 are assembled through the cooperation of the first sliding groove and the sliding fit structure.

In this embodiment, the first sliding groove 14 is provided with two groove side walls, and the two groove side walls are arranged face to face and maintain a certain distance, which is a groove width. The bottoms of the two groove side walls are connected by a groove bottom wall of the first sliding groove 14, thus forming a groove structure with two groove side walls and one groove bottom wall.

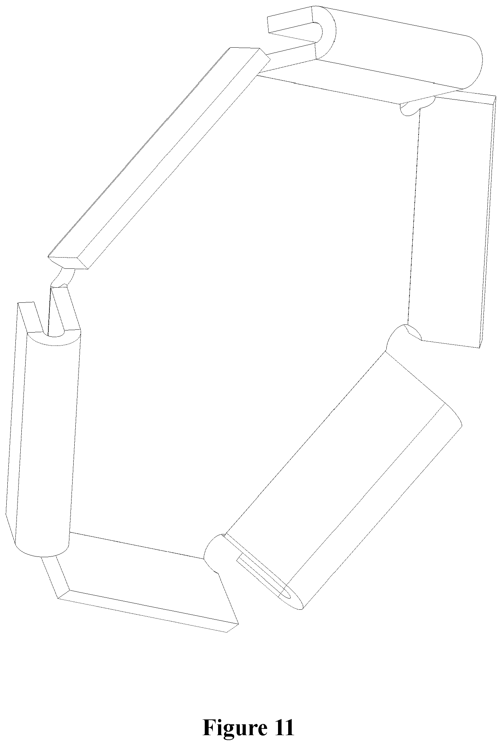

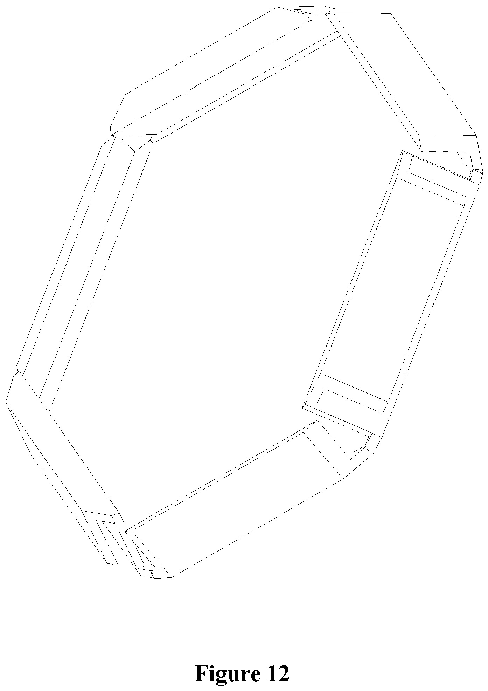

As shown in Figure 11 and Figure 12, it should be noted that, if any two of the first assembling units 11 are assembled together, they are connected through sliding pairs, and specifically, the sliding fit structure 15 slides into the first sliding groove 14. The extension direction of the first sliding groove 14 is the same as the extension direction of the side edge 16 of the connecting part 13 where the first sliding groove 14 is located. In addition, in order for the sliding fit structure 15 to insert into the first sliding groove 14 and slide along the first sliding groove 14, the top of the first sliding groove 14, that is, the side opposite to the groove bottom wall of the sliding groove, is of an open structure. The extension length of the first sliding groove 14 may be the same as the extension length of the side edge 16 where it is located, or less than the extension length of the side edge 16 where it is located.

With this arrangement, any one of all the sides 16 of the first assembling unit 11 is connected with other surrounding assembling units to realize a sliding pair connection. When in connection, the sliding fit structure 15 slides into the first sliding groove 14, since the sliding direction is the same as the direction of the side edge 16 where the sliding pair is located, when the sliding pairs whose extension lines of the sliding direction intersect at the same point are all connected in a sliding way, the sliding freedom degrees of these sliding pairs may form mutual restraint.

For example, when the adjacent three sliding pairs are connected, the sliding directions of the three sliding pairs intersect at the same point, and the sliding of one sliding pair may be restrained by other two sliding pairs, so that the three sliding pairs may not slide under the restraint.

In this way, after assembling, one sliding pair may be restrained by other two sliding pairs. Under natural conditions, the sliding pairs may not be untied. If one of the sliding pairs fails, other two sliding pairs may still restrain each other. The damage of the local first assembling unit 11 may not affect the restraint between the overall sliding pairs, and thus may not affect the overall structural strength.

The contour shape of the cross section of the main body part 12 of the first assembling unit 11 in the present application is a 6n polygon with at least two unequal-length sides. Therefore, the lengths of the sliding pairs matched by two first assembling units 11 are different. The combination time points of the sliding pairs of each side corresponding to each unit are different in the whole sliding fit process, which comes first and then. Therefore, when in splicing, a positioning may be a straight line connected end to end, and the 6n sides can be slidably matched in many times, which greatly reduces the difficulty of assembly. However, for 6n sides with equal side lengths, the sliding pairs of each side are matched at the same time, that is, all sliding pairs need to be positioned at the same time, which undoubtedly increases the difficulty of assembling.

Based on the hexagon as an example, the specific positioning process: first, one side of a pair of parallel sides enters the matching, and then the other side enters the matching; then, one side of another pair of parallel sides enters the matching first, and then the other side enters the matching; the last pair of parallel sides continues to enter the matching; finally, all six sides are connected; after the above treatment, the difficulty of simultaneous positioning of an equilateral hexagon is greatly reduced, and the connection at the same time is changed to a single line connection. The result of surface positioning at the same time is formed based on the straight line connecting end to end 17 through three stages. The 6n polygon is also divided into three sliding fits, which greatly reduces the difficulty of assembly. For example, the six positioning of the hexagon is divided into three stages. First, a group of horizontal or vertical hexagonal vertex angles are connected end to end in a straight line; secondly, multiple horizontal or vertical rows that are loosely connected between parallel straight lines are distributed in a straight line with increasing oblique head and tail connections; thirdly, the diagonal line is added between parallel lines, and then the diagonal line direction of vertex angles is added for positioning connection. The constraint increased step by step strengthens the loose connection into a relatively stable structure (or disordered stable structure). When there is no sliding restraint on six stages at the same time, the hexagon as a whole has firmness.

In a specific embodiment, a side 16 of the main body part 12 of the first assembling unit 11 a straight side, so that the cross section of the main body part 12 is 6n-shaped and at least two sides 16 are of unequal length. In this way, the multiple first assembling units 11 can form a planar structure after assembling.

In practice, the side 16 of the main body part 12 of the first assembling unit 11 may also be a curved side, that is, it can be understood that the main body part 12 of the first assembling unit 11 is bent on the basis of a plane (the connecting part also changes and bends according to the main body). However, in order to ensure the splicing between the first assembling units 11, the opposite sides of the projection of the main body part 12 along the axial direction need to be parallel, so that the multiple first assembling units 11 can be assembled into a circular arc surface, a cylindrical surface or a corrugated surface. In order to ensure the accuracy of the assembling process, it is preferable to set the opposite curved sides of the main body of the first assembling unit 11 to be parallel, that is, the two curves are parallel, specifically, the radians of the curves are the same. To be parallel, that is, the two curves are parallel, specifically, the radians of the curves are the same. What is said here is that when the side of the main body is curved, but it is also within the scope of protection for the sides that are straight.

In practice, the first assembling unit 11 with the curved side 16 can be spliced into the required shape, which can be applied to different scenes, and all of them are within the protection range.

It should be noted that, the two adjacent connecting parts 13 mentioned above refer to the connecting parts 13 provided on two adjacent sides 16 of the main body part 12 of the same assembling unit 11. In this way, any two first assembling units 11 can be connected, and when more first assembling units 11 are assembled, it is only necessary to select any assembling unit for connection.

In addition, it should be noted that, the mutual restraint of the above sliding pairs in the sliding direction defines the degree of freedom in the co-plane where the above sliding pairs are located.

In order to simultaneously realize mutual restraint of vertical degree of freedom of each sliding pair in the same plane (hereinafter referred to as vertical degree of freedom), the sliding fit structure 15 is preferably a second sliding groove. The openings of the first sliding groove 14 and the second sliding groove are opposite, and the first sliding groove 14 and the second sliding groove can be engaged with each other. That is, the side walls of the first sliding groove 14 and the second sliding groove insert into each other's grooves, and the opening directions of the first sliding groove 14 and the second sliding groove are opposite.

When the sliding pair on the adjacent sides 16 complete assembly, the first sliding groove 14 and the second sliding groove 15 on the two adjacent sides 16 of the same first assembling unit 11 have opposite opening directions. Specifically, the first sliding groove on the first assembling unit matches with the second sliding groove on another first assembling unit to form one sliding pair, and the second sliding groove on the first assembling unit matches with the first sliding groove on another assembling unit to form another sliding pair. The vertical degrees of freedom of the two sliding pairs are opposite, and can be restrained to each other to realize a stable assembly in the vertical direction. In this way, when the assembly is completed, the two sliding pairs may form mutual restraints, thereby avoiding the problem of the first sliding groove 14 and the second sliding groove forming the same sliding pair being separated from each other.

The extension directions of the first sliding groove 14 and the second sliding groove are the same as the extension direction of the side edge 16 where they are located, and the extending length is preferably less than or equal to the extending length of the side edge 16 where they are located. In this way, a certain gap exists between two adjacent sliding grooves on the same assembling unit, forming a sliding entrance structure. For the convenience of mounting, both ends of the first sliding groove 14 and the second sliding groove in the extension direction are provided with the sliding entrance structure.

In addition, in order to improve the stability after assembly, the thickness of the side wall of the first sliding groove 14 inserted into the second sliding groove is equal to the width of the second sliding groove, and the thickness of the side wall inserted into the first sliding groove 14 is equal to the width of the first sliding groove 14. With this arrangement, when the first sliding groove 14 and the second sliding groove are matched with each other, on the basis of ensuring that the first sliding groove 14 and the second sliding groove can slide relatively, the matching gap between the two is small, which improves the connection stability.

The first sliding groove 14 and the second sliding groove may form an included angle of 90 degrees with the plane of the main body part 12, that is, the depth directions of the first sliding groove 14 and the second sliding groove are perpendicular to the plane of the main body part 12. In this way, after the main body parts are connected together by the connecting parts 13, the main body parts 12 are located in the same plane. Of course, in other embodiments, the plane between, the first sliding groove 14 and the second sliding groove, and the main body part 12 may also be an acute angle or an obtuse angle. In this way, when the connecting parts 13 of the first assembling units 11 are connected together, the main body parts 12 can be located in different planes. (When the first assembly structure has a certain thickness, the included angle between the connecting part and the main body part (which is a plane) is not 90 degrees when an approximately spherical surface is assembled; when a spherical surface is assembled, that is, the main body part is curved, the included angle between the connecting part and the main body part is 90 degrees.)

In another example of this specific embodiment, the connecting part on the side edge 16 of the first assembling unit 11 can be connected with other first assembling units 11 through the above sliding pair, and may also be connected to each adjacent first assembling unit 11 through a pin-fitting structure. The pin-fitting structure between any two first assembling units 11 includes a first pin hole arranged on the connecting part of one of the first assembling units 11, a second pin hole arranged on the connecting part of the other first assembling unit and aligned with the first pin hole, and a pin shaft inserted into the first pin hole and the second pin hole. The extension directions of the first pin hole and the second pin hole are the same as the extension directions of the sides where the first pin hole and the second pin hole are located.

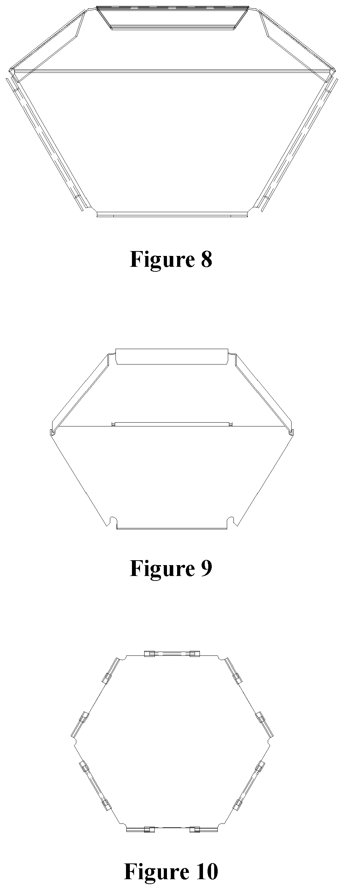

Specifically, it may also provide any two adjacent side edges 16 of the first assembling unit 11 respectively with a pin shaft and a pin shaft hinge that can be clamped with the pin shaft, as shown in Figure 10. The pin shaft of one of the adjacent first assembling units 11 is clamped with the pin shaft hinge of the other, and the adjacent first assembling units are hinged to complete assembling.

For example, the pin-fitting structure described above may be provided on one side of the first assembling unit 11, and sliding pairs are provided on the remaining five sides. The pin-fitting structure is convenient for disassembly and assembly without special tools. Compared with the sliding structure, part of the mechanical performance is reduced, and the convenience of disassembly and assembly is increased.

In addition, it should be noted that, in this embodiment, the main body part 12 of the first assembling unit 11 can also be designed to be detachable, for example, the main body part 12 of the first assembling unit 11 is composed of two parts connected by a pin shaft, as shown in Figure 9.

In this embodiment, the first sliding groove 14 and the second sliding groove are grooves arranged on the upper and lower surfaces of the connecting part 13. In this way, when the first assembling units 11 are spliced together, a whole flat structure with a large area is formed, which can be applied to various fields.

Of course, in other embodiments, the connecting part 13 may also protrude from the main body part 12 or arranged below the main body part 12. When the connecting part 13 protrudes from the main body part 12, the depth of the first sliding groove 14 and the second sliding groove can be made larger than the thickness of the main body part 12, so that the matching area is relatively large, thereby improving the matching reliability.

In other embodiments, the specific arrangement of the first sliding groove 14 and the sliding fit structure 15 can also be set to other types. The following content will list several types for description.

For example, the second sliding groove may be configured as an "L"-shaped sliding buckle that can be inserted into the first sliding groove 14, and the side wall of the "L"-shaped sliding buckle can be inserted into the first sliding groove 14.

For another example, the opening width of the first sliding groove 14 may be set to be smaller than the width between the two groove side walls, and the second sliding groove is a "T"-shaped sliding buckle that can be inserted into the first sliding groove 14.

It should be noted that, the assembly structure formed by assembling the multiple first assembling units 11 has a relatively simple contour, a poor appearance effect, and a relatively simple shape. In order to enrich the overall shape of the assembly structure provided in this embodiment, the assembly structure provided in this embodiment further includes a second assembling unit, and the second assembling unit includes a main body part and a connecting part.

Moreover, the contour shape of the main body part of the second assembling unit is polygonal, such as a triangle, a trapezoid, a rhombus, etc.. It should be noted that, each side of the polygon of the main body part of the second assembling unit can be not only a straight side, but also a curved side. The extension direction of the connecting part of the second assembling unit may be consistent with the shape of the side of the main body part, of course, it may also be inconsistent, and the specific shape may be set according to actual conditions. In practice, the second assembling unit may be formed by bending the first assembling unit 11, as shown in Figure 8.

The connecting part of the second assembling unit is arranged on the side of the main body part of the second assembling unit, and is connected to the main body part as an integral structure, and the connecting part of the second assembling unit can be connected to the connecting part 13 of the first assembling unit 11.

In this way, by adding a second assembling unit to the assembly structure, the overall outer shape of the assembly structure can be changed, which enriches the shape design of the assembly structure.

Similarly, the connecting part of the second assembling unit is similar to the connecting part 13 of the first assembling unit 11, and may also be a sliding fit structure which is matched with the first sliding groove 14 of the first assembling unit 11 or a sliding groove which is matched with the sliding fit structure 15 of the first assembling unit 11. Reference for details may be made to the above description, which will not be repeated here. Each second assembling unit can also be connected with each other.

In addition, in this embodiment, in order to facilitate disassembly and assembly of each first assembling unit, a slot is arranged between the connecting part and the main body part of the first assembling unit, so that the connecting part can generate elastic deformation. The assembly structure further includes a support rib detachably connected to the first assembling unit, and when the support rib is supported in the slot, the elastic deformation of the connecting part can be prevented. With this arrangement, when the first assembling units need to be connected, the connecting parts can be elastically deformed so as to connect the connecting parts. After the connection, the support ribs are mounted on the first assembling unit to prevent the connection from being deformed elastically and causing the connection failure.

Further, in order to prevent the support rib from falling off and facilitate the mounting of the support rib, the first assembling unit is provided with a buckle for clamping the support rib.

The above illustration of the disclosed embodiments can enable those skilled in the art to implement or use the present application. Various modifications to the embodiments are apparent to the person skilled in the art, and the general principle herein can be implemented in other embodiments without departing from the spirit or scope of the present application. Hence, the present application is not limited to the embodiments disclosed herein, but is to conform to the widest scope in accordance with the principles and creative features disclosed herein.

## Claims

1. An assembly structure, comprising: a plurality of first assembling units,
wherein each of the plurality of first assembling units comprises a main body part and a connecting part, a contour shape of a cross-section of the main body part is a 6n polygon with at least two unequal sides, and opposite sides of a projection the main body part in the axial direction are parallel,
wherein n is a positive integer; the connecting part is arranged on each side of the main body part, and is connected to the main body part as an integral structure; the connecting part on each side is connected to and in a sliding fit with the connecting part of adjacent first assembling unit, and a sliding direction of the connecting part is the same as an extension direction on the side where it is located.

2. The assembly structure according to claim 1, wherein the side of the main body part of the first assembling unit a straight side;
or the side of the main body part of the first assembling unit is a curved side, and opposite sides are parallel.

3. The assembly structure according to claim 1, wherein in the connecting parts of any two adjacent sides of the first assembling unit, one of the connecting parts is a first sliding groove, and the other of the connecting parts is a sliding fit structure in a sliding fit with the first sliding groove, an extension direction of the first sliding groove is the same as an extension direction of the side where the first sliding groove is located.

4. The assembly structure according to claim 3, wherein the sliding fit structure is a second sliding groove arranged along the extension direction of the side where the sliding fit structure is located, openings of the first sliding groove and the second sliding groove are opposite in direction, and the first sliding groove and the second sliding groove are engaged with each other.

5. The assembly structure according to claim 4, wherein a side wall thickness of the first sliding groove inserted into the second sliding groove is smaller than or equal to a width of the second sliding groove, and a side wall thickness of the second sliding groove inserted into the first sliding groove is less than or equal to a width of the first sliding groove.

6. The assembly structure according to claim 4, wherein one end and/or two ends of the first sliding groove and the second sliding groove along a sliding direction is/are provided with a sliding entrance structure.

7. The assembly structure according to claim 3, wherein the second sliding groove is an L-shaped slide fastener which is inserted into the first sliding groove, and a side wall of the L-shaped side fastener is inserted into the first sliding groove.

8. The assembly structure according to claim 3, wherein an opening width of the first sliding groove is smaller than a width between two side walls of the first sliding groove, and the second sliding groove is a T-shaped slide fastener which is inserted into the first sliding groove.

9. The assembly structure according to claim 1, wherein an included angle between the connecting part and the main body part of the first assembling unit is 90 degrees.

10. The assembly structure according to claim 1, wherein the connecting part on the side is also connected to the adjacent first assembling unit through a first pin-fitting structure, the first pin-fitting structure comprises a first pin shaft arranged on a connecting part of one of the first assembling units, and a first pin shaft hinge which is arranged on a connecting part of the other first assembling unit is hinged with the first pin shaft, an extension direction of the first pin shaft is the same as an extension direction of the side where it is located.

11. The assembly structure according to claim 1, wherein a slot is provided between the connecting part and the main body part to allow the connecting part to be elastically deformed, the assembly structure further comprises a support rib detachably connected to the first assembling unit, and that the support rib is supported in the groove prevents the connecting part from being elastically deformed.

12. The assembly structure according to claim 11, wherein the first assembling unit is provided with a buckle for mounting the support rib.

13. The assembly structure according to any one of claims 1 to 12, further comprising a second assembling unit, wherein the second assembling unit comprises a main body part and a connecting part, a contour shape of the main body part of the second assembling unit is polygonal, and the connecting part of the second assembling unit is arranged on a side of the second assembling unit and has an integrated structure; the connecting part of the second assembling unit is slidably connected to the connecting part of the first assembling unit or the connecting part of an adjacent second assembling unit.

14. The assembly structure according to claim 13, wherein an included angle between the connecting part of the second assembling unit and the main body part of the second assembling unit is 90 degrees.

15. The assembly structure according to claim 10, wherein the connecting part of the second connecting unit is also connected to the connecting part of the first assembling unit or the connecting part of the second assembling unit through a second pin-fitting structure, the second pin-fitting structure further comprises a second pin shaft arranged on one connecting part, and a second pin shaft hinge which is arranged on the other connecting part and is configured to be hinged with the second pin shaft, an extension direction of the second pin shaft is the same as the extension direction of the side where it is located.
